# EUROPEAN PATENT SPECIFICATION

(11) **EP 0 772 402 B1**
(45) Date of publication and mention of the grant of the patent: **12.07.2000**
(21) Application number: 96913751.2
(22) Date of filing: 06.05.1996
(51) Int. Cl.: A22C 21/06

(54) **APPARATUS FOR CUTTING OPEN THE ABDOMINAL CAVITY OF SLAUGHTERED POULTRY**
APPARAT ZUM EINSCHNEIDEN DER BAUCHHÖHLE VON SCHLACHTGEFLÜGEL
APPAREIL D'INCISION DE LA CAVITE ABDOMINALE DE VOLAILLES ABATTUES

(30) Priority: 04.05.1995 NL 1000307
(43) Date of publication of application: 14.05.1997
(73) Proprietor: MACHINEFABRIEK MEYN B.V., 1511 AE Oostzaan (NL)
(72) Inventor: JANSEN, Tom Cornelis, NL-1511 AE Oostzaan (NL)
(74) Representative: Van Breda, Jacobus
(86) International application number: NL9600194
(87) International publication number: WO9634533

(56) References cited:
- DE-A- 3 030 376
- NL-A- 7 801 712
- NL-A- 8 101 527
- US-A- 4 184 230
- US-A- 5 346 427

## Description

The invention relates to an apparatus for cutting open the abdominal cavity of slaughtered poultry, comprising positioning means for a bird, tensioning means for tensioning the abdominal skin from the inside at the intended cutting location and a cutting apparatus for making a transverse cut in the abdominal skin, and wherein the birds with their legs are suspended from a suspension conveyor. Such an apparatus is known from NL-A-8 101 527.

Before the entrails can be removed from the abdominal cavity of slaughtered poultry a cut should be made in the abdominal cavity, generally between the legs of the poultry.

By means of the positioning means the bird is correctly positioned relative to the cutting apparatus. The tensioning means so to say pull outwardly the abdominal skin at the intended cutting location such that the cutting location is exactly defined, whereas further only those components are cut loose by the cutting apparatus which, during a succesive operation, have to be removed from the abdominal cavity of the bird together with the entrails. The remaining weight of the bird resulting after evisceration thus is increased which leads to a higher yield.

According to the invention, the latter effect is further increased in that the cutting apparatus consists of at least a knife rotating around a substantially vertical axis which is positioned at such a distance aside of the track followed by the suspension conveyor, that the knife is movable substantially synchronously with a respective bird and between its legs along some distance.

The circle followed by the knife having the vertical axis as centre touches or intersects, respectively, the track followed by the suspension conveyor. Thus the knife, if correctly synchronised with the suspension conveyor, will engage between the legs of the bird suspended from the suspension conveyor at an appropriate moment and will thus make a transverse cut in the abdominal skin. As a result of the circular track followed by the knife the knife not only will move along synchronously with the respective bird over some distance, but will also move into and next out of the abdominal skin automatically. This motion occurs in a direction substantially in parallel with the plane of symmetry of the body of the bird, such that it can be avoided in a favourable manner that the knife engages the legs of the bird. Thus the cut may effectively extend widely, substantially from leg to leg. Further, by choosing the distance between the track followed by the suspension conveyor and the vertical axis (or in other words the relation between the track followed by the suspension conveyor and the track followed by the knife), this gives the possibility of changing the depth of engagement of the knife in the abdominal skin. Like this a transverse cut can be made in the abdominal skin having a variable length. Thus one can take into account specific requirements applying for different countries.

Further it is advantageous if each rotating knife comprises a disc-shaped knife which, by means of a planetary drive, follows a circular track having the vertical axis as centre and which further rotates around its own centre.

Apart from following a circular track having the vertical axis as centre, each rotating knife further rotates around its own centre. This increases the ease with which the knife makes the transverse cut in the abdominal skin. Further this substantially limits the wear of the knife such that it will have a longer life.

Further it is favourable if the cutting apparatus comprises two disc-shaped knives positioned at two equal mutual angular intervals. Like this no extreme rotational velocities of the knife around the vertical axis are necessary for processing the birds conveyed through the suspension conveyor. It is noted that it is of course possible that the birds are conveyed in a different manner than using a suspension conveyor. If for example the birds do not have a suspended position defined by such a suspension conveyor, but in contrast are conveyed resting upon a different conveyor, the cutting apparatus exhibits a corresponding position adopted thereto, wherein especially the orientation of the axis will deviate from the vertical direction. It is only of importance that the mutual relative position between the cutting apparatus and the conveyor is in correspondence with what has been mentioned previously.

As may be known, when processing poultry often use is made of carousels cooperating with the suspension conveyor. In such a case, in correspondence with a preferred embodiment, such a carousel may carry a number of positioning means spaced regularly about its circumference as well as tensioning means corresponding therewith. The synchronization between the carousel and the cutting apparatus then is such that always a knife cooperates with the positioning means and a tensioning means corresponding therewith. In a specific application the carousel for example carries 20 positioning means spaced about its circumference together with corresponding tensioning means, whereas the cutting apparatus, as noted previously, comprises two disc shaped knives. In such a case the transmission between the carousel and the cutting apparatus is such that the cutting apparatus has an angular velocity which is ten times larger than the angular velocity of the carousel.

In correspondence with a preferred embodiment of the apparatus according to the invention the tensioning means consist of tensioning spoons which are movable into the abdominal cavity of a bird and which are movable upwardly and downwardly as well as pivotable outwardly relative to the carousel. Using the upward and downward motion of the tensioning spoons these can be stuck into the abdominal cavity of the bird to be processed through the cloaca. Next, by pivoting the tensioning spoon outwardly, the abdominal skin will be tensioned at the desired cutting location whereafter a knife can make the desired transverse cut.

In this aspect it is noted that the drive of the tensioning means may be carried out such that after making the transverse cut the tensioning spoon is pivoted outwardly even further, as a result of which the abdominal skin is ruptured between the transverse cut made and the cloaca and a larger access opening is obtained for later on removing the entrails. For favouring this rupture the tensioning spoon may comprise an appropriately shaped cutting edge.

In a way known per se the upward and downward motion as well as the pivotal motion of the tensioning spoons is caused by cooperating curved tracks and follower rollers. The shape of the curved tracks hereby depends upon the desired motion of the tensioning spoons.

Further an embodiment of the apparatus according to the invention is mentioned, wherein each positiniong means comprises a U-shaped brace positionable from above between the legs of a bird and a clamping device movable upward and downward along the carousel and tensioning the bird against the brace. By means of the U-shaped brace the legs of the bird to be processed are sufficiently spread such that next, between the U-shaped brace, the abdominal skin is moved upward by means of the tensioning means. The U-shaped brace causes a well defined positioning of the legs which is rather independent from the dimensions of the respective bird. As a result it is always possible to make an optimal transverse cut without running the risk that the knife touches the legs. The clamping device clamps the bird against the, generally stationary, U-shaped brace and holds the bird by making the transverse cut. After the cut is made the clamping device again disengages the bird such that it can be removed by the suspension conveyor.

It is possible that the upward and downward motion of the clamping device is caused by cooperating curved tracks and follower rollers. In an apparatus of the type previously mentioned, however also more generally in apparatus for processing poultry, comprising processing means activated by cooperating curved tracks and follower rollers, it may be of advantage that at least part of the curved track can change its position for changing the motion of the processing means. By way of example this may be realised in a constructive manner in that the curved track is defined within the circumference of a cylindrical body wherein part of the circumference of this body may be shifted for changing the curved track. Such a cylindrical body may be part of the carousel in the apparatus according to the invention.

When the curved track controls the motion of the tensioning spoon, by means of a change of the curved track the motion of the tensioning spoon can be adapted to different dimensions of the birds to be processed. A complicated setting of the apparatus or substituting the tensioning spoon by another tensioning spoon then becomes redundant. The shift of the respective part of the circumference of the body can occur by means of appropriate driving mechanisms which, in a simple manner, are externally activatable.

Hereinafter the invention will be elucidated by means of the drawing, in which an embodiment of the apparatus according to the invention is illustrated.
Fig. 1 shows schematically a side elevational view of an embodiment of the apparatus according to the invention;
fig. 2 shows on a larger scale a detail of the apparatus represented in fig. 1 in a top plan view;
fig. 3 shows, also at a larger scale, another detail of the apparatus indicated in fig. 1 in two positions, and
fig. 4 shows a planar development of the curved tracks provided in the apparatus according to fig. 1.

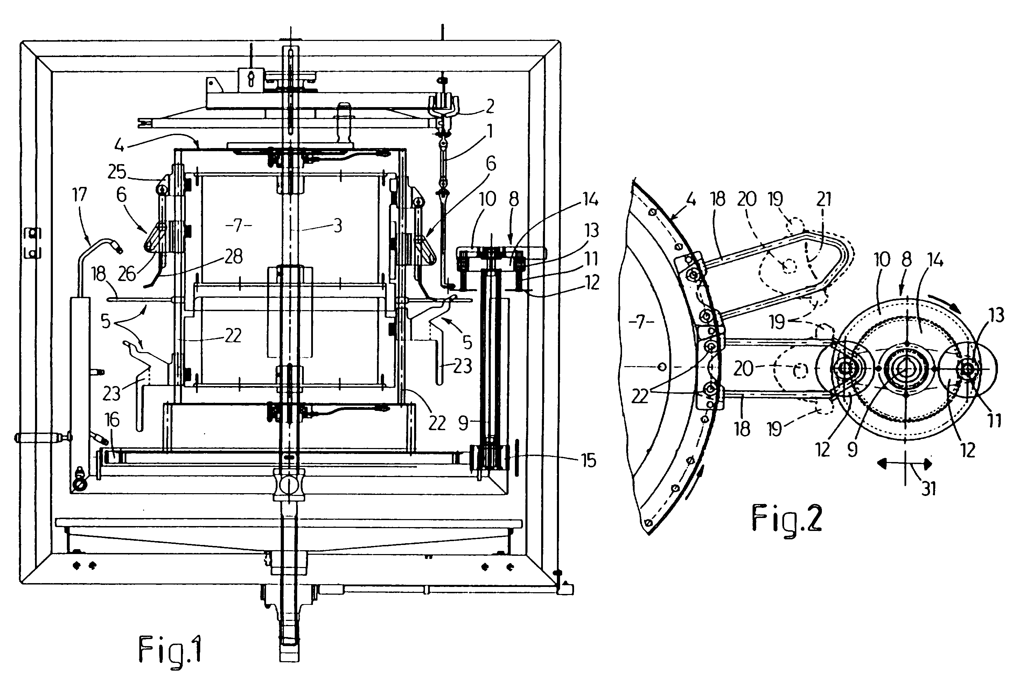

The apparatus illustrated in fig. 1 is meant for transversally cutting open the abdominal cavity of slaughtered poultry. This process occurs previously to the evisceration of the entrails.

The birds to be processed arrive by means of a conventional conveyor 2 comprising suspension hooks 1. In a known manner said suspension conveyor 2 cooperates with a carousel 4 rotating around a central vertical axis 3. The rotation of the carousel 4 is fully synchronised with the velocity of conveyance of the suspension conveyor 2.

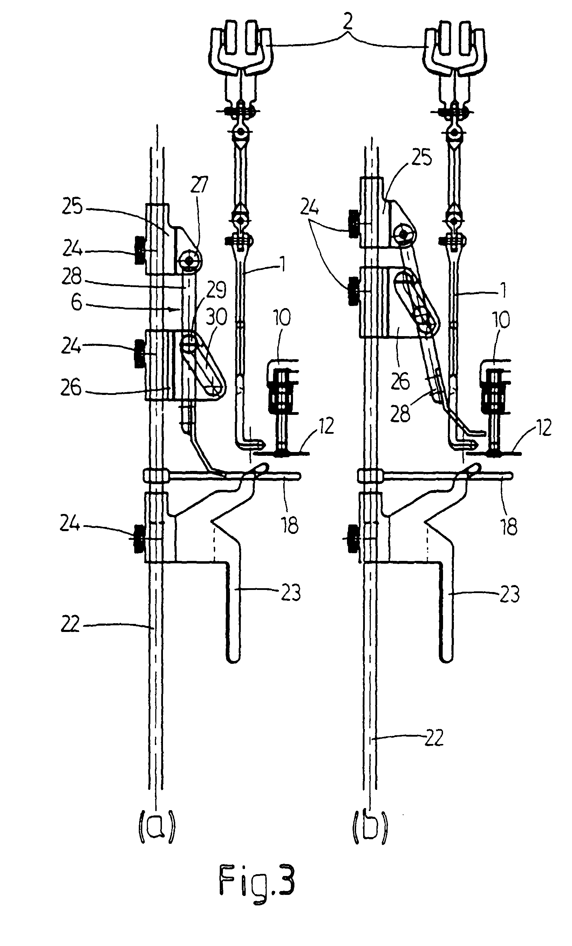

The carousel 4 is provided with positiong means 5 spaced regularly about its circumference as well as with tensioning means 6. The function and operation of these positioning means and tensioning means 6 will be elucidated referring to fig. 3. Further the construction of these means will become more clear by means of fig. 3.

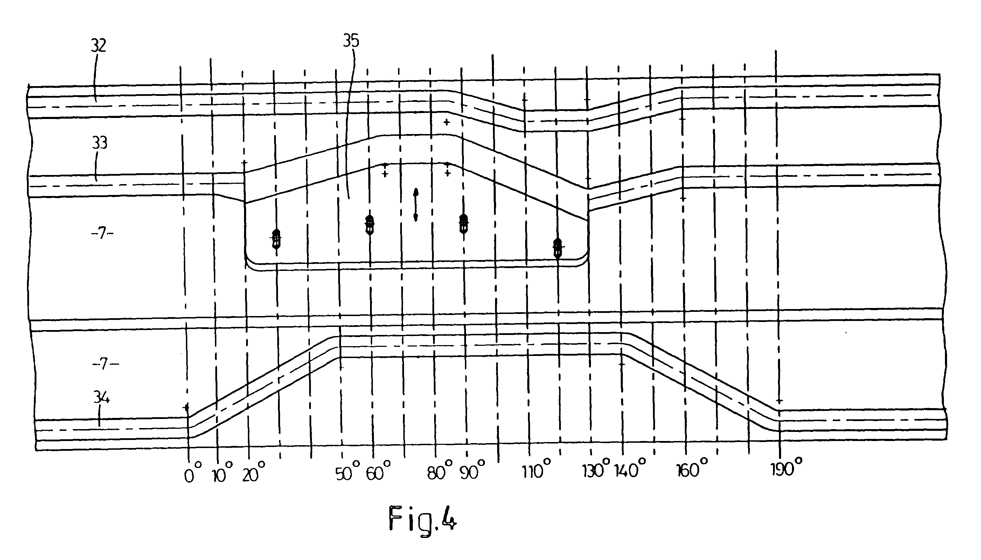

As is known per se as well, the core of the carousel 4 is defined by a stationary cylindrical body 7 in which a number of curved tracks are provided which, in cooperation with follower rollers, cause the appropriate motions of the positioning means 5 and the tensioning means 6. The curved tracks will be elucidated later by means of fig. 4.

Aside of the carousel 4 a cutting apparatus 8 is positioned which is intended for making a transverse cut in the abdominal skin of birds conveyed by means of the suspension conveyor 2. The operation of said cutting apparatus will become more clear by means of fig. 2.

The cutting apparatus mainly comprises a knife carrier 10 rotating around a vertical axis 9 in which, rotatable around vertical axes 11, two disc-shaped knives 12 are journalled. Onto the axis 11 of each disc-shaped knife 12 a gear wheel 13 is mounted which engages a stationary central gear wheel 14.

Onto the lower end of the vertical axis 9 of the cutting apparatus 8 a gear wheel 15 is attached which engages a circumferential toothing 16 of the carousel 4. Like this a synchronised motion between the carousel 4 or the birds conveyed by the suspension conveyor 2, respectively, and the cutting apparatus 8 will occur. In the embodiment illustrated, in which the cutting apparatus 8 is provided with two disc-shaped knives 12, the carousel carries at its circumference twenty positioning means 5 and tensioning means 6, respectively, and the ratio between the toothing 16 and the gear wheel 15 is such, that the angular velocity of the cutting apparatus 8 is ten times larger than the angular velocity of the carousel 4. Like this always one disc-shape knife 12 will cooperate with one positioning means 5 or tensioning means 6, respectively, or in other words with one passing bird.

Further the apparatus may be provided with cleaning means 17.

The positioning means 5 and tensioning means 6 only schematically indicated in fig. 1 are further elucidated referring to fig. 2 and 3. Each positioning means 5 comprises a U-shaped brace 18 which is applied between the legs of a bird to be processed. Thereby said U-shaped brace 18 will push against the lower body of the bird while leaving free the cloaca and the location where the transverse cut is intended. In fig. 2 the position of a bird to be processed relative to two braces 18 is schematically indicated in dotted lines; visible are the legs 19 and the cloaca 20. A completed transverse cut is indicated in fig. 2 by means of a dotted and striped line 21.

In the illustrated embodiment the brace 18 has a stationary position. Below the brace a clamping device 23 is provided which is movable upward and downward along guiding rods 22. For causing the upward and downward motion of the clamping device 23 along said guiding rods 22 it carries a follower roller 24 cooperating with curved tracks defined in the cylindrical body 7 of the carousel 4.

A bird arriving in a suspension hook 1 of the suspension conveyor 2 will be positioned relative to the brace 18 at the carousel 4 in a manner shown in fig. 2, whereafter the clamping device 23 is moved upward and the bird with its lower body firmly engages the brace 18. After completing the processing of the bird the clamping device 23 will move downward again and will disengage the bird.

Referring to fig. 3 the construction of the tensioning means 6 is clearly visible. Each tensioning means 6 comprises two slides 25, 26 which also comprise follower rollers 24, of which the uppermost slide 25, which can rotate around a horizontal pivot axis 27, carries a tensioning spoon 28. At some distance below the horizontal pivot axis 27 a tensioning spoon 28 is, by means of a transverse axis 29, shiftable housed for shifting in an inclined slot 30 in the lowermost slide 27.

When, starting in the position illustrated in fig. 3a, both slides 25 and 26 move upward and downward in common, wherein the mutual distance between the slides 25 and 26 does not change, the tensioning spoon 28 will also move upward and downward without pivoting around the horizontal pivot axis. By moving both slides 25 and 26 upward in this manner the tensioning spoon 28 can be positioned in the cloaca 20 (see fig. 2) of a bird with its bend end. When next the uppermost slide 25 is moved upward, whereas the lowermost slide 26 is moved upward more fastly (such that the distance between both slides decreases) the tensioning spoon 28 not only will move upward but also, as shown in fig. 3b, will pivot outwardly. As a result the abdominal skin of the bird will be tensioned at the desired cutting location. In this position, in which the end of the tensioning spoon is positioned above the location of a disc-shaped knife 12 (as visible in fig. 3b) a transverse cut will be made in correspondence with 21 in fig. 2.

Due to the circumferential motion of the birds around the carousel 4 and the circumferencial motion of the disc-shaped knives 12 around the axis 9 of the cutting apparatus 8 synchronised therewith, it is possible that the transverse cut 21 can be made until closely to the legs 19 of a bird without said legs 9 being hit by the disc-shaped knives 12. Further, by varying the distance between the vertical axis 9 of the cutting apparatus 8 and the carousel 4 in correspondence with the double arrow 31 in fig. 2, the depth at which the disc-shaped knives 12 will engage in the abdominal skin of the bird may be varied, and thus also the length of the transverse cut 21.

After a transverse cut 21 has been made it is possible to further pivot outwardly the tensioning spoon 28 by moving both slides 25 and 26 of the tensioning means 6 even more closer towards each other, such that the abdominal skin ruptures between the completed transverse cut 21 and the cloaca 20. Like this an extremely large access opening to the abdominal cavity of the bird is created which simplifies eviscerating.

After the transverse cut 21 has been made like this, the tensioning spoon 28 can be removed from the abdominal cavity of the bird by an appropriate manipulation of the slides 25 and 26. As described earlier, thereafter the bird is disengaged by the collecting device 23 whereafter the bird is removed using the suspension conveyor 2 of the carousel 4.

Although the figures and description take as a starting point a configuration in which the birds are supplied to the cutting apparatus suspending from a suspension conveyor 2, it is conceivable too that the birds are supplied to the cutting apparatus in a different orientation. If this is a lying configuration the cutting apparatus should have a differing orientation corresponding therewith, for example such that the axis 9 extends horizontally and not vertically. The basic operation of the apparatus does not change. Further it is conceivable that instead of disc-shaped knives 12 which also rotate around axis 11, knives are applied which rotate only around axis 9. Further the amount of knives provided on the knive carrier 10 could differ from the number shown, as long as there is a synchronization between these knives and the arriving birds.

In fig. 4 there is represented part of a planar development of the circumference of the cylindrical body 7 of the carousel 4. Therein above each other three curved tracks 32, 33 and 34 are defined. The two uppermost curved tracks 32 and 33 control the motion of the slides 25 and 26 of the tensioning means 6, whereas the lowermost curved track 34 is responsible for moving upward and downward of the clamping device 23. The vertically extending striped and dotted lines give an indication of the angular rotation of the carousel 4 relative to the stationary cilindrical body 7, wherein the distance between two succesive striped and dotted lines corresponds with an angular rotation of 10°.

Starting from an arbitrary chosen angular position of 0° the clamping device 23 will be moved upwards along the guiding rods 22 (due to the rising section of the curved track 34), until the angular position 50° has been reached. At 10° the lowermost slide 26 will move down slightly and will be suspended from the transverse axis 29 of the tensioning spoon 28. From angular position 20° until past angular position 60° the lowermost slide 26 will move upward, such that the tensioning spoon 28 is pivoted outwardly. After reaching angular position 80° the uppermost slide 25 and lowermost slide 26 will slightly move downward commonly such as to slowly increase the distance therebetween. As a result the tensioning spoon 28 will at one hand slightly move downward and at the other hand pivot inwardly. At 110° the uppermost slide 25 has reached its lowermost position whereas in respect of the lowermost slide this occurs not before 130° (in correspondence with the shape of the curved track 33). In this position the distance between both slides again is at a maximum, such that the tensioning spoon 28 is pivoted fully inwardly. Next both slides move upwards in common until 160°. Meanwhile, starting at 140°, the clamping device 23 has started to move downward, such that at 190° the bird is again disengaged fully.

Of course variations are possible relative to the illustrated shape of the curved tracks 32, 33 and 34. Basically each desired succession of motions may be obtained by the cooperation between curved tracks and follower rolls.

The part of the curved track 33 between angular positions 20° and 130° is limited by a movable part 35 of the cylindrical body 7. This part is vertically movable upward and downward through a driving mechanism not shown in detail which is controlable externally. Like this it is possible to control the distance over which the lowermost slide 26 moves upward, and thus the angle over which the tensioning spoon 28 pivots. Thus the extent of tensioning of the abdominal skin of the bird can be controlled, thus also taking into account birds with different dimensions.

It is noted that changing the curved track using such a part 35 in general is also applicable to other devices in which as a result of a cooperation between curved tracks and follower rolls processing means or alike have to be controlled.

The invention is not limited to the embodiment described before which can be varied widely within the scope of the invention as defined by the claims.

## Claims

1. Apparatus for cutting open the abdominal cavity of slaughtered poultry, comprising positioning means (5) for a bird, tensioning means (6) for tensioning the abdominal skin from the inside at the intended cutting location and a cutting apparatus (8) for making a transverse cut in the abdominal skin, and
wherein the birds with their legs are suspended from a suspension conveyor (2), **characterised** in that the cutting apparatus (8) consists of at least a knife (12) rotating around a substantially vertical axis (11) which is positioned at such a distance aside of the track followed by the suspension conveyor (2), that the knife (12) is movable substantially synchronously with a respective bird and between its legs (19) along some distance.

2. Apparatus according to claim 1, **characterised** in that each rotating knife (12) comprises a disc-shaped knife which, by means of a planetary drive (13, 14), follows a circular track having the vertical axis (11) as centre and which further rotates around its own centre.

3. Apparatus according to claim 2, **characterised** in that the cutting apparatus (8) comprises two disc-shaped knives (12) positioned at two equal mutual angular intervals.

4. Apparatus according to one of the claims 1-3, **characterised** by a carousel (4) cooperating with the suspension conveyor (2), and carrying a number of positioning means (5) spaced regularly about its circumference as well as tensioning means (6) corresponding therewith.

5. Apparatus according to claim 4, **characterised** in that the tensioning means (6) consist of tensioning spoons (28) which are movable into the abdominal cavity of a bird and which are movable upwardly and downwardly as well as pivotable outwardly relative to the carousel.

6. Apparatus according to claim 5, **characterised** in that the upward and downward motion as well as the pivotal motion of the tensioning spoons (28) is caused by cooperating curved tracks and follower rollers (24).

7. Apparatus according to one of the claims 4-6, **characterised** in that each positioning means (5) comprises a U-shaped brace (18) positionable from above between the legs (19) of a bird and a clamping device (23) movable upward and downward along the carousel (4) and tensioning the bird against the brace (18).

8. Apparatus according to claim 7, **characterised** in that the upward and downward motion of the clamping device (23) is caused by cooperating curved tracks and follower rollers (24).

9. Apparatus, preferably for processing poultry, according to one of the previous claims, comprising processing means activated by cooperating curved tracks (32, 33, 34) and follower rollers (24) **characterised** in that at least part of the curved track can change its position for changing the motion of the processing means.

10. Apparatus according to claim 9, **characterised** in that the curved track is defined within the circumference of a cylindrical body (7) wherein part (35) of the circumference of this body may be shifted for changing the curved track.

11. Apparatus according to claim 10, **characterised** in that the cylindrical body (7) is part of the carousel (4) according to one of the claims 5-9.

## Patentansprüche

1. Vorrichtung zum Aufschneiden der Bauchhöhle von Schlachtgeflügel mit Positioniereinrichtungen (5) für einen Vogel, Spanneinrichtungen (6) zum Spannen der Bauchhaut von der Innenseite an der vorgesehenen Schnittstelle und mit einer Schneideeinrichtung (8) zum Herstellen eines schräg verlaufenden Schnittes in der Bauchhaut, wobei die Vögel mit ihren Beinen von einer Aufhängefördereinrichtung (2) abgehängt sind, dadurch gekennzeichnet,
daß die Schneideinrichtung (8) mindestens ein Messer (12) aufweist, das sich um eine im wesentlichen vertikale Achse (11) dreht, die nach der Aufhängefördereinrichtung (2) in einer solchen Entfernung neben der Bahn angeordnet ist, daß das Messer (12) im wesentlichen synchron mit einem entsprechenden Vogel und zwischen seinen Beinen (19) über eine Strecke drehbar ist.

2. Vorrichtung nach Anspruch 1, dadurch gekennzeichnet, daß jedes Drehmesser (12) ein scheibenförmiges Messer aufweist, das durch einen Planetenantrieb (13, 14) auf einer runden Bahn mit der vertikaler, Achse (11) als Mittelpunkt läuft und das sich außerdem um seinen eigenen Mittelpunkt dreht.

3. Vorrichtung nach Anspruch 2, dadurch gekennzeichnet, daß die Schneideinrichtung (8) zwei scheibenförmige Messer (12) aufweist, die an zwei gleichwinkligen beidseitigen Zwischenräumen angeordnet sind.

4. Vorrichtung nach einem der Ansprüche 1 bis 3, gekennzeichnet durch ein Karussell (4), das mit der Aufhängefördereinrichtung (2) zusammenwirkt und das sowohl eine Anzahl an Positioniereinrichtungen (5), die gleichmäßig um seinen Umfang beabstandet sind, als auch mit diesen korrespondierende Spanneinrichtungen (6) trägt.

5. Vorrichtung nach Anspruch 2, dadurch gekennzeichnet, daß die Spanneinrichtung (6) Spannlöffel (28) aufweist, die in die Bauchhöhle eines Vogels bewegbar und die sowohl auf- und abwärts bewegbar als auch nach außen relativ zum Karussell schwenkbar sind.

6. Vorrichtung nach Anspruch 5, dadurch gekennzeichnet, daß sowohl die Auf- und Abwärtsbewegung als auch die Schwenkbewegung der Spannlöffel (28) durch das Zusammenwirken gebogener Bahnen und Abtastrollen (24) veranlaßbar ist.

7. Vorrichtung nach einem der Ansprüche 4 bis 6, dadurch gekennzeichnet, daß jede Positioniereinrichtung (5) eine U-förmige Klammer (18), die von oben zwischen die Beine (19) eines Vogels positionierbar ist, und eine Klemmeinrichtung (23) aufweist, die auf- und abwärts entlang dem Karussell (4) bewegbar ist und den Vogel gegen die Klammer (18) spannt.

8. Vorrichtung nach Anspruch 7, dadurch gekennzeichnet, daß die Auf- und Abwärtsbewegung der Klemmeinrichtung (23) durch ein Zusammenwirken gebogener Bahnen und Abtastrollen (24) veranlaßbar ist.

9. Vorrichtung, insbesondere zur Geflügelbearbeitung, nach einem der vorhergehenden Ansprüche, mit Bearbeitungseinrichtungen, die durch ein Zusammenwirken gebogener Bahnen (32, 33, 34) und Abtastrollen (24) aktivierbar sind, dadurch gekennzeichnet, daß wenigstens ein Teil der gebogenen Bahn seine Lage zum Ändern der Bewegung der Bearbeitungseinrichtungen ändern kann.

10. Vorrichtung nach Anspruch 9, dadurch gekennzeichnet, daß die gebogene Bahn in der Umfangsfläche eines zylindrischen Körpers (7) gebildet ist, wobei ein Teil (35) der Umfangsfläche dieses Körpers zum Ändern der gebogenen Bahn verstellbar ist.

11. Vorrichtung nach Anspruch 10, dadurch gekennzeichnet, daß der zylindrische Körper (7) Teil des Karussells (4) gemäß einem der Ansprüche 5 bis 9 ist.

## Revendications

1. Appareil d'ouverture par coupe de la cavité abdominale d'une volaille abattue, comprenant un dispositif (5) de positionnement d'une volaille, un moyen ou dispositif (6) de mise sous tension de la peau abdominale depuis l'intérieur à l'emplacement prévu de coupe, et un appareil (8) de coupe destiné à effectuer une coupe transversale dans la peau abdominale, et
dans lequel les volailles sont suspendues par leurs pattes à un transporteur de suspension ou transporteur suspendu (2), caractérisé en ce que l'appareil de coupe (8) est constitué d'au moins un couteau (12) qui tourne autour d'un axe pratiquement vertical (11) positionné à une distance sur le côté de la voie suivie par le transporteur suspendu (2) telle que le couteau (12) est mobile pratiquement en synchronisme avec une volaille respective et entre ses pattes (19) sur une certaine distance.

2. Appareil selon la revendication 1, caractérisé en ce que chaque couteau rotatif (12) comporte un couteau en forme de disque qui, à l'aide d'une transmission planétaire (13, 14) suit une voie circulaire dont l'axe vertical (11) constitue le centre et qui tourne en outre autour de son propre centre.

3. Appareil selon la revendication 2, caractérisé en ce que l'appareil de coupe (8) comprend deux couteaux (12) en forme de disque placés à deux intervalles angulaires mutuels égaux.

4. Appareil selon l'une des revendications 1 à 3, caractérisé par un carrousel (4) qui coopère avec le transporteur suspendu (2) et qui porte un certain nombre de moyens ou dispositifs de positionnement (5) espacés régulièrement à sa circonférence ainsi qu'un dispositif de tension (6) qui lui correspond.

5. Appareil selon la revendication 4, caractérisé en ce que le dispositif de mise sous tension (6) est constitué de cuillères (28) de tension qui sont mobiles dans la cavité abdominale d'une volaille et qui sont mobiles vers le haut et vers le bas ainsi que par pivotement vers l'extérieur par rapport au carrousel.

6. Appareil selon la revendication 5, caractérisé en ce que les mouvements ascendant et descendant et le mouvement de pivotement des cuillères de tension (28) sont provoqués par des voies courbes et des galets (24) suiveurs ou formant toucheau qui coopèrent.

7. Appareil selon l'une des revendications 4 à 6, caractérisé en ce que chaque dispositif de positionnement (5) comporte un tirant en U (18) qui peut être positionné par-dessus entre les pattes (19) d'une volaille et un dispositif (23) de serrage mobile vers le haut et vers le bas le long du carrousel (4) et qui met la volaille sous tension contre le tirant (18).

8. Appareil selon la revendication 7, caractérisé en ce que le déplacement vers le haut et vers le bas du dispositif de serrage (23) est provoqué par des voies courbes et des galets formant toucheau (24) qui coopèrent.

9. Appareil, de préférence destiné au traitement des volailles, selon l'une des revendications précédentes, comprenant un moyen ou dispositif de traitement activé par des voies courbes (32, 33, 34) et des galets formant toucheau (24) qui coopèrent, caractérisé en ce qu'une partie au moins d'une voie courbe peut changer de position afin qu'elle change le mouvement du dispositif de traitement.

10. Appareil selon la revendication 9, caractérisé en ce que la voie courbe est délimitée dans la circonférence d'un corps cylindrique (7) dans lequel une partie (35) de la circonférence de ce corps peut être décalée pour changer la voie courbe.

11. Appareil selon la revendication 10, caractérisé en ce que le corps cylindrique (7) fait partie du carrousel (4) selon l'une des revendications 5 à 9.
